# EUROPEAN PATENT SPECIFICATION

(11) **EP 2 371 192 B1**
(45) Date of publication and mention of the grant of the patent: **26.03.2014**
(21) Application number: 11157591.6
(22) Date of filing: 10.03.2011
(51) Int. Cl.: A01B 43/00

(54) **Machine for working terrain, especially for eliminating stones and old vegetation from the surface of a seedbed and levelling the surface**
Vorrichtung zur Bodenbearbeitung, insbesondere zum Entfernen von Steinen und alter Vegetation von der Oberfläche eines Saatbetts, und zur Nivellierung der Oberfläche
Machine pour travailler un terrain, notamment pour éliminer des pierres et des matières végétales mortes de la surface d'un lit de semence, ainsi pour niveller la surface

(30) Priority: 25.03.2010 IT RE20100027
(43) Date of publication of application: 05.10.2011
(73) Proprietor: Carboni, Renzo, 42022 Boretto (Reggio Emilia) (IT)
(72) Inventor: Carboni, Renzo, 42022 Boretto (Reggio Emilia) (IT)
(74) Representative: Corradini, Corrado

(56) References cited:
- EP-A1- 0 039 792
- WO-A1-2008/104903
- US-A- 4 313 502

## Description

The invention concerns the preparation of seedbeds, and more in detail the elimination of stones and old vegetation from the surface layer of seedbeds, levelling the surface perfectly and automatically.

Seedbeds are generally prepared using a series of mechanical operations, including the usual ploughing and the subsequent harrowing of the soil by means of machines known as rotary harrows.

The presence of stones in the soil constitutes a serious drawback, since the stones are generally distributed on the surface, thus making both subsequent sowing operations and the correct germination of seeds irregular, but also damaging the machines used for mowing and/or threshing operations. Machines are known for example from EP 0 039 792 A, which eliminate stones, debris and old vegetation from the surface layer of the seedbed: they comprise a rotor with radial hoe blades which rotate in the opposite direction to the direction of advancement of the machine on the ground.

The rotor is inserted into the soil to a desired depth, collects the layer of soil containing stones, debris and vegetation, and launches it towards the rear of the machine.

Here the soil encounters a grid which allows only the portion of soil containing no stones and debris to pass through, while stopping the stones and debris, which then fall into the furrow the rotor has created.

The stones, debris and old vegetation are then covered by the soft soil which passed through the grid, and are buried at the desired depth.

An orientable, sheet-metal wall is arranged downstream of the grid, which collects the soil that has passed through the grid and directs it downwardly. The orientable wall drags along the ground which has been worked, levelling the soil which has passed through the grid such as as to deliver a perfectly level seedbed.

The rotor is supported by the main frame of the machine, which in turn is attached to the rear lift of a tractor. The rotor is driven by a suitable transmission mechanism which is powered by the tractor's rear power take-off.

The depth to which the rotor is inserted into the soil is regulated by a roller, the roller being arranged to the rear of the rotor and being supported by a frame which is hinged to the main frame of the machine.

A suitable hydraulic actuator regulates the position between the main frame of the machine and the hinged frame.

The orientable wall which is arranged downstream from the grid is in turn hinged to the main frame of the machine and is kept in position by elastic means which the operator can manually adjust when the machine is stationary.

The elastic means operate between the orientable wall and the main frame of the machine.

Although known machines of the above-delineated type perform their work well enough, they have a drawback which limits their use and effectiveness. When the soil being worked by the machine exhibits irregularities, depressions, areas of differing consistency, and/or when the operator wishes to vary the operating depth, the mass of soil passing through the grid and hitting the orientable wall often becomes excessive, causing clogging which compromises regular operation of the machine and brings the machine to a halt.

In such cases, the drawback is obviated by acting manually on the appropriate screw jacks, which adjust the elastic contrast means of the mobile wall. This however obliges the operator to halt the machine and to leave the driving seat in order to intervene manually on the adjustment means of the elastic means.

In known machines, the elastic means act between the main frame of the machine and the mobile wall, independently of the depth at which the rotor is operating. This depth depends in turn on the reciprocal positions of the main frame of the machine and the rear hinged frame.

The aim of the invention is to obviate the above-mentioned drawback within the ambit of a simple, low-cost solution

This aim is attained by a machine exhibiting the characteristics delineated in the independent claim.

The dependent claims concern further characteristics which improve the machine's performance.

The invention achieves the set aims due to the fact that the elastic positioning means of the orientable wall act between the orientable wall and the hinged frame, in such a way that the force contrasting the swinging of the orientable wall is at least partially sensitive to the position of the hinged frame and therefore to the depth at which the rotor is operating.

Adjustment is done in a totally automatic way, thus enabling the depth of operation to be varied while the tractor is in a phase of continuous advancement and the operator is seated in the driving seat.

Further, under certain conditions, for example when operating at shallow depths, the invention enables the orientable wall to remain pressed on the soil under the effect of its own weight, which can be adjusted in advance using appropriate ballast elements.

The advantages and constructional and functional characteristics of the invention will emerge from the following detailed description, which, with the aid of the appended figures of the drawings, illustrates a preferred embodiment thereof, provided by way of a non-limiting example.

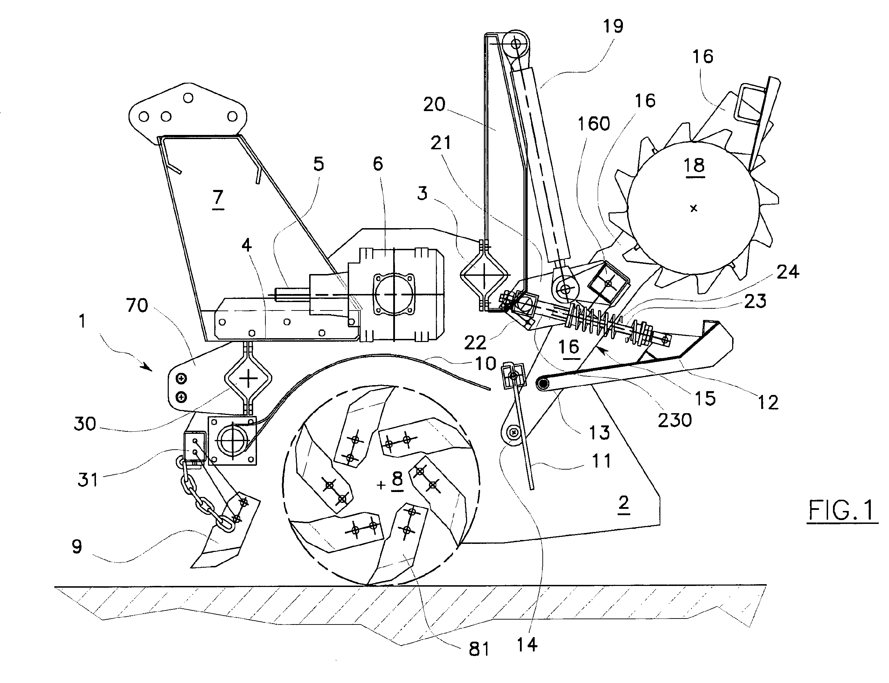

Figure 1 is a schematic side view of the machine being transferred by road.
Figure 2 shows the machine in a first operating position.
Figure 3 shows the machine in a second operating position, working at a greater depth.

The figures show the machine for burying stones, which machine comprises a main frame 1 provided with two side walls 2.

The walls 2 are reciprocally joined by the crossbars 3, 30, 31 and comprise an upper plate 4 upon which the input drive shaft 5 and the relative transmission group 6 are centrally arranged.

The bracket 7 for attaching the main frame to the rear lift (not shown) of the tractor is branched from the plate 4.

Below the bracket 7, further brackets 70 having the same function as the bracket 7, originate from the forward crossbar 30.

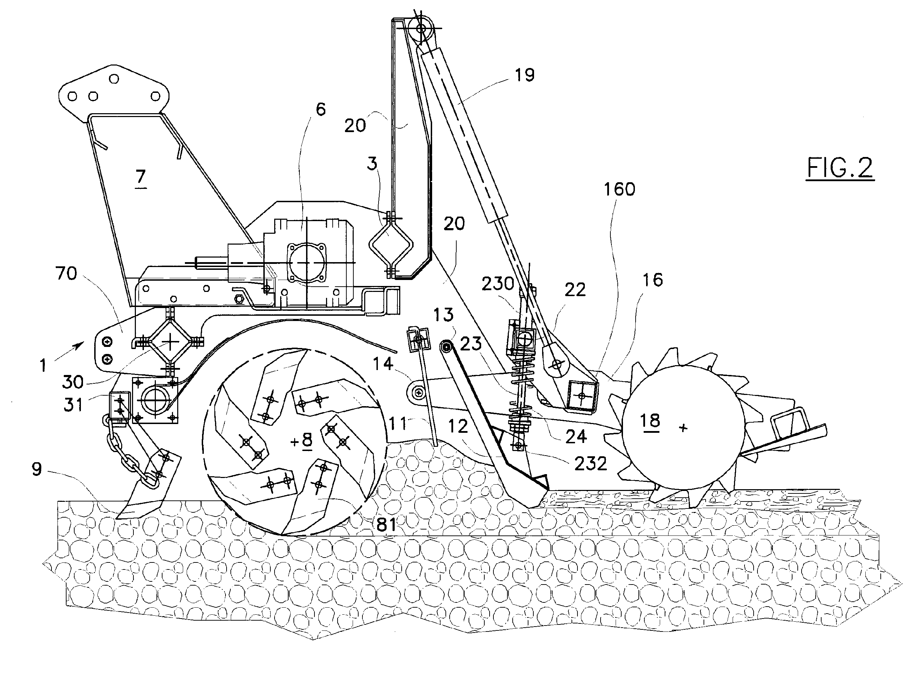

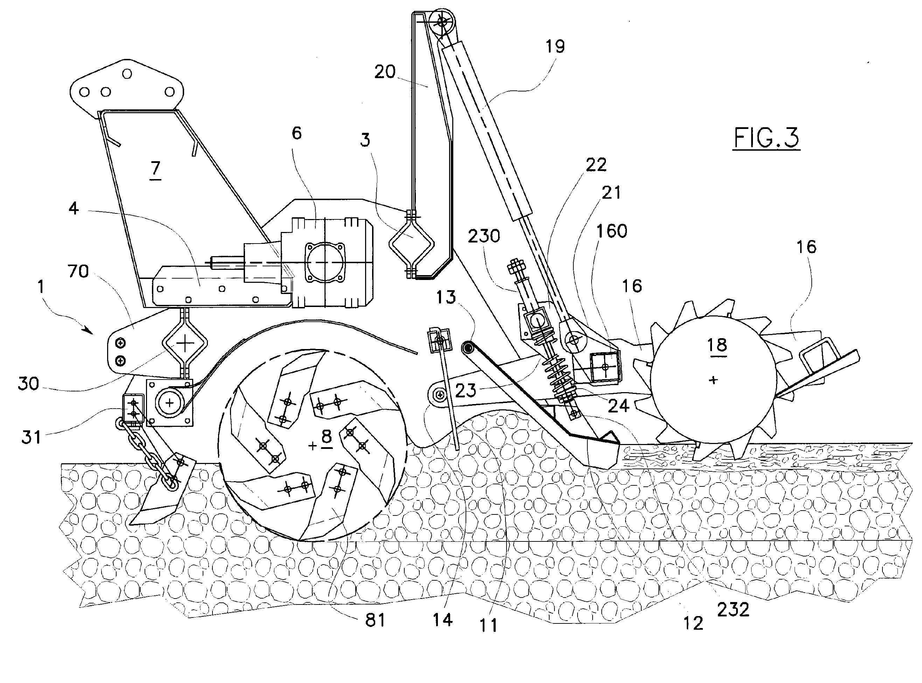

The rotor 8, provided with teeth or blades 81 rotating in an anticlockwise direction in figures 2 and 3, is supported between the side walls.

Usual means for transmitting motion to the rotor from the shaft 5 are not shown since they are of a known type.

Ahead of the rotor, the main frame 1 supports a non-critical number of small equidistant ploughshares 9.

Above the rotor and between the walls 2, the main frame supports the curved wall 10 which prevents soil and stones from being thrown upwards.

In the example shown the wall 10 projects appropriately and is elastically supported.

To the rear of the rotor, the main frame of the machine supports a grid 11, which retains stones, vegetation and debris launched by the rotor, allowing only soil to pass through.

Behind the grid 11, the main frame of the machine supports a mobile wall 12 which is free to swing about an axis 13 thereof.

A hinged frame 15 comprising two side plates 16 which are joined by the crossbar 160 is hinged on the axis 14 to the main frame of the machine, and more precisely to the side walls 2.

An idle roller 18 which compresses the worked soil is supported between the side plates 16.

The crossbar 160 is joined centrally to the frame 1, by a jack 19 which is connected to the central column 20 of the frame 1.

The jack 19 determines the position of the roller 18, and by means of the roller 18 regulates the depth at which the rotor 8 operates in the soil.

At least two brackets 21 are arranged on the crossbar 160, each of which supports one or more guides 22. The guides 22 are free to rotate about an axis which is parallel to the crossbar. A stem 23, which is hinged to the mobile wall 12, slides within the guides 22.

In the ilustrated example, the guides 22 comprise a tubular guide 230 within which the stem 23 slides, the stem 23 being prevented from coming free from the tubular guide by an adjustable end nut 231, the position of which also determines the stroke of the stem, which does not involve the spring or the spring preload, if present.

The adjustable nut 231 can also serve to preload the spring if necessary.

A compression spring 24 is arranged between the hinging point 232 of the stem 23 and the respective tubular guide 230.

The spring 24 is shorter than the maximum distance between the guide 230 and the hinging point 232 of the stem 23, such that the stem can slide for a tract in the guide without stressing the spring.

There follows a description of the functioning of the invention.

After having applied the machine to the rear lift of the tractor, and working from the driving seat position, the operator adjusts the position of the roller 18 with respect to the rotor 8, by acting on the jack 19.

At this point the operator lowers the tool until the rotor 8 is resting on the ground, with the roller 18 in a raised position with respect to the ground. When the rotor 8 is set in motion, and the machine is simultaneously advanced, the rotor 8 creates a furrow in the soil, the depth of which furrow is determined by the roller 18 resting on the ground.

By rotating in the opposite direction to the direction of advancement of the machine, the rotor lifts the soil, mixed with old vegetation, stones and debris, collects it from the furrow and propels it against the curved wall 10, which directs the soil, old vegetation, stones and debris against the grid 11.

The grid 11 stops the old vegetation, stones and debris, causing them to fall, under the effect of gravity, into the furrow immediately behind the rotor 8. The stone-free soil instead passes through the grid and hits the mobile wall 12.

The mobile wall 12 causes the finely sifted soil to fall into the furrow, at the bottom of which the old vegetation, stones and debris have collected. Thus the old vegetation, stones and debris are covered, and the moving wall 12 levels the soil prior to the action of the roller 18.

The action of the mobile wall 12 on the soft soil which is being launched by the rotor is for a first short tract of oscillation due to the actual weight of the mobile wall, correctable if necessary by use of appropriate ballast weights, while the subsequent upward swings are also regulated by the action of the springs 24, the springs 24 being solicited by the mobile wall which rises when in contact with the ground.

The force exerted by the springs 24 in reaction to the position of the wall 12 also depends on the spring preload, which in turn varies according to the position of the adjustable nut 231 and of the roller 18.

The more the roller 18 is raised, the greater are the working depth, the spring load and the action of the mobile wall on the soil being worked.

If the quantity of earth raised by the rotor, which impacts against the mobile wall, should for any reason become excessive, the mobile wall rises against the action of the springs, letting the excess of soil pass, thus preventing the machine from clogging and at the same time maintaining the surface perfectly levelled.

The result is that the operator can set any depth from the driving seat, merely by activating the lever 19 of the cylinder 19 which acts on the rear roller 18, on which the depth of operation depends. By varying the depth according to needs, and without having to stop the tractor, i.e. remaining comfortably seated in the driving position it is possible to automatically obtain the correct load on the mobile wall and a perfect levelling of the surface with any desired operating depth.

Any variants and improvements can be brought to the machine illustrated herein above by way of example, without forsaking the ambit of the following claims.

## Claims

1. A machine for working terrain, including burying rocks and stones comprising a main frame which is destined to be fixed to a rear lift link of a tractor; a rotor (8) having radial blades (81) which is supported transversally to an advancement direction of the machine; means for activating the rotor in an opposite direction to the advancement direction of the machine; a fixed grid (11) and an orientable wall (12) which are arranged in order downstream of the rotor (8) with respect to the advancement direction; a frame (15) which is posteriorly hinged to the main frame (1) and bears a levelling roller (18); **characterised in that** the machine further comprises means for regulating a position of the hinged frame with respect to the main frame (1), and **in that** the orientable wall (12) is hinged to the main frame (1) and is pushed against the ground for an initial tract by a weight of the orientable wall, and subsequently by elastic means acting between the orientable wall (12) and the hinged frame (15).

2. The machine of claim 1, **characterised in that** the mobile wall (12) is connected to the hinged frame (15) by at least a stem (23), which is hinged to the mobile wall (12) and slides freely in a seating (230) which is hinged to the hinged frame (15), the stem acting as a guide for a spring (24) which is arranged between the mobile wall (12) and the hinged seating (230).

3. The machine of claim 1, **characterised in that** the stem (23) is longer than the spring (24), and thus can slide for a tract thereof without stressing the spring (24).

4. The machine of claim 1, **characterised in that** the mobile wall (12) comprises ballast which can increase the weight thereof.

5. The machine of claim 1, **characterised in that** it comprises a shaped wall (10) located above the rotor (8) which prevents the terrain material from being launched upwards.

6. The machine of claim 1, **characterised in that** the grid (11) is fixed to the main frame (1) of the machine and is oriented vertically behind the rotor (8), or is inclined slightly towards the rear part of the machine.

## Patentansprüche

1. Maschine zur Bodenbearbeitung, einschließlich des Vergrabens von Felsen und Steinen, umfassend einen Hauptrahmen, der dafür vorgesehen ist, an einer rückseitigen Hubverbindung eines Traktors befestigt zu werden, einen Rotor (8) mit radialen Schaufeln (81), der quer zu einer Vorrückrichtung der Maschine gestützt wird, Mittel zum Aktivieren des Rotors in einer zur Vorrückrichtung der Maschine entgegengesetzten Richtung, ein feststehendes Gitter (11) und eine ausrichtbare Wand (12), die nacheinander in Bezug auf die Vorrückrichtung hinter dem Rotor (8) angeordnet sind, einen Rahmen (15), der hinten an den Hauptrahmen (1) angelenkt ist und eine Planierwalze (18) trägt, **dadurch gekennzeichnet, dass** die Maschine ferner Mittel zum Regulieren einer Position des angelenkten Rahmens in Bezug auf den Hauptrahmen (1) umfasst und dass die ausrichtbare Wand (12) an den Hauptrahmen (1) angelenkt ist und über eine Anfangsstrecke durch ein Gewicht der ausrichtbaren Wand und danach durch elastische Mittel, die zwischen der ausrichtbaren Wand (12) und dem angelenkten Rahmen (15) wirken, an den Boden gedrückt wird.

2. Maschine nach Anspruch 1, **dadurch gekennzeichnet, dass** die bewegliche Wand (12) mit dem angelenkten Rahmen (15) durch mindestens eine Spindel (23) verbunden ist, die an die mobile Wand (12) angelenkt ist und frei in einem Sitz (230) gleitet, der an den angelenkten Rahmen (15) angelenkt ist, wobei die Spindel als Führung für eine Feder (24) wirkt, die zwischen der mobilen Wand (12) und dem angelenkten Sitz (230) angeordnet ist.

3. Maschine nach Anspruch 1, **dadurch gekennzeichnet, dass** die Spindel (23) länger als die Feder (24) ist und somit über eine Strecke derselben gleiten kann, ohne die Feder (24) zu belasten.

4. Maschine nach Anspruch 1, **dadurch gekennzeichnet, dass** die mobile Wand (12) Ballast umfasst, der ihr Gewicht erhöhen kann.

5. Maschine nach Anspruch 1, **dadurch gekennzeichnet, dass** sie eine geformte Wand (10) umfasst, die sich über dem Rotor (8) befindet und das Hinaufschleudern von Bodenmaterial verhindert.

6. Maschine nach Anspruch 1, **dadurch gekennzeichnet, dass** das Gitter (11) am Hauptrahmen (1) der Maschine befestigt ist und vertikal hinter dem Rotor (8) ausgerichtet ist oder leicht zum hinteren Teil der Maschine hin geneigt ist.

## Revendications

1. Machine de travail du sol, y compris l'enfouissement de roches et de pierres, comprenant un châssis principal destiné à être fixé à un bras de levage arrière d'un tracteur ; un rotor (8) comportant des lames radiales (81) supportées transversalement à la direction d'avancement de la machine ; un moyen d'activation du rotor dans une direction opposée à la direction d'avancement de la machine ; une grille fixe (11) et une paroi orientable (12) qui sont agencées dans l'ordre en aval du rotor (8) par rapport à la direction d'avancement ; un châssis (15) qui est articulé à l'arrière du châssis principal (1) et qui porte un rouleau de nivellement (18) ; **caractérisée en ce que** la machine comprend en outre la régulation d'une position du châssis articulé par rapport au châssis principal (1), et **en ce que** la paroi orientable (12) est articulée au châssis principal (1) et est poussée contre le sol sur une distance initiale par le poids de la paroi orientable, et ensuite par un moyen élastique agissant entre la paroi orientable (12) et le châssis articulé (15).

2. Machine selon la revendication 1, **caractérisée en ce que** la paroi mobile (12) est connectée au châssis articulé (15) par au moins une tige (23) qui est articulée à la paroi mobile (12) et glisse librement dans un siège (230) qui est articulé au châssis articulé (15), la tige agissant comme un guide pour un ressort (24) qui est agencé entre la paroi mobile (12) et le siège articulé (230).

3. Machine selon la revendication 1, **caractérisée en ce que** la tige (23) est plus longue que le ressort (24), et peut donc glisser sur une distance de celle-ci sans contraindre le ressort (24).

4. Machine selon la revendication 1, **caractérisée en ce que** la paroi mobile (12) comprend un ballast qui peut augmenter le poids de celle-ci.

5. Machine selon la revendication 1, **caractérisée en ce qu'**elle comprend une paroi profilée (12) située au-dessus du rotor (8) qui évite que le matériau du sol ne soit lancé vers le haut.

6. Machine selon la revendication 1, **caractérisée en ce que** la grille (11) est fixée au châssis principal (1) de la machine, et est orientée verticalement derrière le rotor (8) ou est inclinée légèrement vers la partie arrière de la machine.
